(19) Europäisches Patentamt
European Patent Office
Office européen des brevets

(11) **EP 2 864 101 B1**

(12) **EUROPEAN PATENT SPECIFICATION**

(45) Date of publication and mention
of the grant of the patent:
**06.04.2016 Bulletin 2016/14**

(51) Int Cl.:
**C08L 23/08** *(2006.01)*    **C08J 5/18** *(2006.01)*
**B29C 47/00** *(2006.01)*

(21) Application number: **13726978.3**

(22) Date of filing: **22.05.2013**

(86) International application number:
**PCT/US2013/042136**

(87) International publication number:
**WO 2014/003923 (03.01.2014 Gazette 2014/01)**

(54) **A POLYETHYLENE BLEND-COMPOSITION SUITABLE FOR BLOWN FILMS, AND FILMS MADE THEREFROM**

POLYETHYLENGEMISCHZUSAMMENSETZUNG FÜR BLASFOLIEN UND DARAUS HERGESTELLTE FOLIEN

COMPOSITION DE MÉLANGE DE POLYÉTHYLÈNE ADAPTÉE À DES FILMS SOUFFLÉS ET FILMS COMPOSÉS DE CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.06.2012 US 201261664327 P**

(43) Date of publication of application:
**29.04.2015 Bulletin 2015/18**

(73) Proprietor: **Dow Global Technologies LLC Midland, MI 48674 (US)**

(72) Inventors:
• **WANG, Jian**
  **Rosharon, TX 77583 (US)**
• **SAVARGAONKAR, Nilesh R.**
  **Pearland, TX 77584 (US)**
• **DEMIRORS, Mehmet**
  **Pearland, TX 77584 (US)**

(74) Representative: **Boult Wade Tennant Verulam Gardens 70 Gray's Inn Road London WC1X 8BT (GB)**

(56) References cited:
**WO-A1-2005/061614     US-A1- 2005 064 161 US-A1- 2008 038 533**

**Description**

**Field of Invention**

The instant invention relates to a polyethylene blend-composition suitable for blown films, and films made therefrom.

**Background of the Invention**

The use of polymeric materials such as ethylene-based compositions in an extrusion blown film process is well-known. The extrusion blown film process employs an extruder which heats, melts, and conveys the molten polymeric material and forces it through an annular die. The ethylene-based film is drawn from the die and formed into a tubular shape and eventually passed through a pair of draw or nip rollers. Internal compressed air is then introduced from the mandrel causing the tube to increase in diameter forming a bubble of the desired size. Thus, the blown film is stretched in two directions, namely in the axial direction, i.e. by the use of forced air which expands the diameter of the bubble, and in the lengthwise direction of the bubble, i.e. by the action of a winding element which pulls the bubble through the machinery. External air is also introduced around the bubble circumference to cool the melt as it exits the die. The film width is varied by introducing more or less internal air into the bubble thus increasing or decreasing the bubble size. The film thickness is controlled primarily by increasing or decreasing the speed of the draw roll or nip roll to control the draw-down rate.

The bubble is then collapsed into two doubled layers of film immediately after passing through the draw or nip roll. The cooled film can then be processed further by cutting or sealing to produce a variety of consumer products.

Despite the research efforts in producing the polymeric materials suitable for blown films, there is still a need for a polyethylene blend composition suitable for blown film, providing improved output rates. Furthermore, there is still a need for a method of producing a polyethylene blend composition suitable for blown film, providing improved output rates.

**Summary of the Invention**

The instant invention provides a polyethylene blend-composition suitable for blown films, and films made therefrom.

In one embodiment, the instant invention provides a polyethylene blend-composition suitable for blown films comprising the melt blending product of: (a) from 0.5 to 5 percent by weight of a high density polyethylene having a density in the range of from 0.950 to 0.970 $g/cm^3$, and a melt flow rate ($I_2$) in the range of from less than 0.5 g/10 minutes, and a molecular weight distribution ($M_w/M_n$) in the range of from 10 to 40, and $M_z$ in the range of from 800,000 to 5,000,000 g/mol; (b) 90 percent or greater by weight of a linear low density polyethylene having a density in the range of from 0.910 to 0.950 $g/cm^3$, and a melt index ($I_2$) in the range of from 0.1 to less than or equal to 5 g/10 minutes; (c) optionally a hydrotalcite based neutralizing agent; (d) optionally one or more nucleating agents; (e) and optionally one or more antioxidants.

In an alternative embodiment, the instant invention provides a blown film comprising the polyethylene blend-composition, as described above.

In an alternative embodiment, the instant invention further provides an article comprising one or more blown films comprising the polyethylene blend-composition, as described above.

In another alternative embodiment, the instant invention further provides a container device comprising: (a) one or more substrates; and (b) one or more layers comprising one or more blown films comprising the polyethylene blend-composition, as described above.

In an alternative embodiment, the instant invention provides a polyethylene blend-composition suitable for blown films, a blown film, an article and/or a container device, in accordance with any of the preceding embodiments, except that when said polyethylene blend-composition is formed into a film via blown film process, the output rate is improved at least 6 percent relative to a similar linear low density polyethylene.

**Detailed Description of the Invention**

The instant invention provides a polyethylene blend-composition suitable for blown film applications, and films made therefrom. The term "polyethylene blend-composition," as used herein, refers to a physical blend of at least a high density polyethylene and a linear low density polyethylene, as described herein.

The polyethylene blend-composition suitable for blown film according to the present invention comprises the melt blending product of: (a) from 0.5 to 5 percent by weight of a high density polyethylene having a density in the range of from 0.950 to 0.970 $g/cm^3$, and a melt flow rate ($I_2$) in the range of from less than 0.5 g/10 minutes, and a molecular weight distribution ($M_w/M_n$) in the range of from 10 to 40, and $M_z$ (Z-Average Molecular Weight) in the range of from 800,000 to 5,000,000 g/mol; (b) 90 percent or greater by weight of a linear low density polyethylene having a density in the range of from 0.910 to 0.950 g/cm$^3$, and a melt index ($I_2$) in the range of from 0.1 to less than or equal to 5 g/10 minutes; (c) optionally a hydrotalcite based neutralizing agent; (d) optionally one or more nucleating agents; (e) and optionally one or more antioxidants.

The polyethylene blend-composition has a density in the range of 0.910 to 0.955 g/cm$^3$. All individual values and subranges from 0.910 to 0.955 g/cm$^3$ are included herein and disclosed herein; for example, the density can be from a lower limit of 0.910, 0915 g/cm$^3$ to an upper limit of 0.925, 0.930, 0.940, 0.945, or 0.955 g/cm$^3$. For example, the polyethylene blend-composition may have a density in the range of from 0.917 to 0.935 g/cm$^3$; or in the alternative, from 0.918 to 0.925 g/cm$^3$; or in the alternative, from 0.919 to 0.923 g/cm$^3$.

The polyethylene blend-composition has a melt index ($I_2$) in the range of from 0.1 to 5 g/10 minutes. All individual values and subranges from 0.1 to 5 g/10 minutes are included herein and disclosed herein; for example, the melt index ($I_2$) can be from a lower limit of 0.1, 0.2, 0.5, or 0.8 g/10 minutes, to an upper limit of 1, 2, 3, 4, or 5 g/10 minutes. For example, the polyethylene blend composition may have a melt index ($I_2$) in the range of from 0.2 to 5 g/10 minutes; or in the alternative, from 0.2 to 3 g/10 minutes; or in the alternative, from 0.5 to 2 g/10 minutes.

The inventive polyethylene blend-compositions can provide higher melt strength, better bubble stability and higher output rate as well as improved optical properties.

In another embodiment, when said polyethylene blend-composition is formed into a film via blown film process, the output rate is improved at least 6 percent, for example from 6 to 20 percent, relative to a similar linear low density polyethylene.

### HDPE Component

The polyethylene blend-composition suitable for blown film according to the presence invention comprises from 0.5 to 5 percent by weight of a high density polyethylene. The high density polyethylene comprises (a) less than or equal to 100 percent, for example, at least 65 percent, or at least 70 percent, or at least 80 percent, or at least 90 percent, by weight of the units derived from ethylene; and (b) less than 35 percent, for example, less than 25 percent, or less than 20 percent, or less than 10 percent, by weight of units derived from one or more $\alpha$-olefin comonomers. The term "high density polyethylene" refers to a polymer that contains more than 50 mole percent polymerized ethylene monomer (based on the total amount of polymerizable monomers) and, optionally, may contain at least one comonomer.

The $\alpha$-olefin comonomers typically have no more than 20 carbon atoms. For example, the $\alpha$-olefin comonomers may preferably have 3 to 10 carbon atoms, and more preferably 3 to 8 carbon atoms. Exemplary $\alpha$-olefin comonomers include, but are not limited to, propylene, 1-butene, 1-pentene, 1-hexene, 1-heptene, 1-octene, 1-nonene, 1-decene, and 4-methyl-1-pentene. The one or more $\alpha$-olefin comonomers may, for example, be selected from the group consisting of propylene, 1-butene, 1-hexene, and 1-octene; or in the alternative, from the group consisting of 1-hexene and 1-octene.

The high density polyethylene has a density in the range of from greater than 0.950 to 0.970 g/cm$^3$. For example, the density can be from a lower limit of 0.951, 0.953, or 0.954 g/cm$^3$ to an upper limit of 0.960, 0.965, or 0.970 g/cm$^3$.

The high density polyethylene has a molecular weight distribution ($M_w/M_n$) in the range of from 10 to 40. For example, the molecular weight distribution ($M_w/M_n$) can be from a lower limit of 10, 12, 15, or 18 to an upper limit of 25, 30, 35, or 40.

The high density polyethylene has a melt index ($I_2$) in the range of from less than 0.5 g/10 minutes, for example, in the range of from 0.01 to less than 0.5.

The high density polyethylene has a z-average molecular weight ($M_z$) in the range of 800,000 to 5,000,000 g/mol.

Any conventional ethylene (co)polymerization reaction processes may be employed to produce the high density polyethylene. Such conventional ethylene (co)polymerization reaction processes include, but are not limited to, gas phase polymerization process, slurry phase polymerization process, solution phase polymerization process, and combinations thereof in the presence of one or more catalyst systems including, but not limited to Ziegler-Natta catalyst systems, metallocene catalyst systems, and/or post-metallocene catalyst systems, using one or more conventional reactors, e.g. fluidized bed gas phase reactors, loop reactors, stirred tank reactors, batch reactors in parallel, series, and/or any combinations thereof.

### Linear Low Density Polyethylene (LLDPE) Component

The polyethylene blend-composition suitable for blown film according to the present invention comprises 90 percent or greater by weight of a linear low density polyethylene (LLDPE); for example, from 90 to 99 weight percent; or in the alternative from 95 to 99 weight percent; or in the alternative from 97 to 99 weight percent. In one embodiment, the linear low density polyethylene is a heterogeneous linear low density polyethylene (hLLDPE). The term heterogeneous linear low density polyethylene (hLLDPE), as used herein, refers to a linear low density polyethylene that is prepared via a heterogeneous catalyst system including 2 or more active sites for polymerization.

The LLDPE has a density in the range of from 0.917 to 0.950 g/cm$^3$. All individual values and subranges from 0.910 to 0.950 g/cm$^3$ are included herein and disclosed herein; for example, the density can be from a lower limit of 0.910, 0.915, 0.917, 0.918, or 0.919 g/cm$^3$ to an upper limit of 0.930, 0.941, 0.947, or 0.950 g/cm$^3$. For example, the LLDPE may have a density in the range of from 0.915 to 0.950 g/cm$^3$; or in the alternative, from 0.917 to 0.950 g/cm$^3$; or in the alternative, from 0.918 to 0.925 g/cm$^3$; or in the alternative, from 0.918 to 0.922 g/cm$^3$; or in the alternative, from 0.919 to 0.921 g/cm$^3$.

The LLDPE has a molecular weight distribution ($M_w/M_n$) in the range of from 2 to 5, for example, from 3.5 to 5.

The LLDPE has a melt index ($I_2$) in the range of from 0.1 to 5 g/10 minutes. All individual values and subranges from 0.1 to 5 g/10 minutes are included herein and disclosed herein; for example, the melt index ($I_2$) can be from a lower limit of 0.1, 0.2, 0.5, or 0.8 g/10 minutes, to an upper limit of 1, 2, 3, 4, or 5 g/10 minutes. For example, the LLDPE may have a melt index ($I_2$) in the range of from 0.2 to 5 g/10 minutes; or in the alternative, from 0.2 to 3 g/10 minutes; or in the alternative, from 0.5 to 2 g/10 minutes.

The LLDPE may have a melt flow ratio ($I_{10}/I_2$) in the range of from 6 to 10. All individual values and subranges from 6 to 10 are included herein and disclosed herein. For example, the LLDPE may have a melt flow ratio ($I_{10}/I_2$) in the range of from 7 to 10; or in the alternative, from 7 to 9.

In one embodiment, the LLDPE may have 2 or more peaks on the Differential Scanning Calorimetry (DSC) heating curve, measured according to the Differential Scanning Calorimetry (DSC) method.

The LLDPE may comprise less than 35 percent by weight of units derived from one or more $\alpha$-olefin comonomers. All individual values and subranges from less than 35 weight percent are included herein and disclosed herein; for example, the LLDPE may comprise less than 25 percent by weight of units derived from one or more $\alpha$-olefin comonomers; or in the alternative, less than 20 percent by weight of units derived from one or more $\alpha$-olefin comonomers; or in the alternative, less than 15 percent by weight of units derived from one or more $\alpha$-olefin comonomers; or in the alternative, less than 10 percent by weight of units derived from one or more $\alpha$-olefin comonomers.

The $\alpha$-olefin comonomers typically have no more than 20 carbon atoms. For example, the $\alpha$-olefin comonomers may preferably have 3 to 10 carbon atoms, and more preferably 3 to 8 carbon atoms. Exemplary $\alpha$-olefin comonomers include, but are not limited to, propylene, 1-butene, 1-pentene, 1-hexene, 1-heptene, 1-octene, 1-nonene, 1-decene, and 4-methyl-1-pentene. The one or more $\alpha$-olefin comonomers may, for example, be selected from the group consisting of propylene, 1-butene, 1-hexene, and 1-octene; or in the alternative, from the group consisting of 1-hexene and 1-octene.

The LLDPE may comprise at least 65 percent by weight of units derived from ethylene. All individual values and subranges from at least 65 weight percent are included herein and disclosed herein; for example, the LLDPE may comprise at least 75 percent by weight of units derived from ethylene; or in the alternative, at least 85 percent by weight of units derived from ethylene; or in the alternative, at least 90 percent by weight of units derived from ethylene.

The LLDPE may further be compounded with one or more additional components such as other polymers and/or additives. Such additives include, but are not limited to, one or more hydrotalcite based neutralizing agents, antistatic agents, color enhancers, dyes, lubricants, fillers, pigments, primary antioxidants, secondary antioxidants, processing aids, UV stabilizers, nucleating agents, and/or combinations thereof. The LLDPE may contain any amounts of additives. The LLDPE may comprise from about 0 to about 10 percent by the combined weight of such additives, based on the combined weight of LLDPE and such additives.

Any conventional ethylene (co)polymerization reaction may be employed to produce the LLDPE. Such conventional ethylene (co)polymerization reactions include, but are not limited to, gas phase polymerization process, slurry phase polymerization process, solution phase polymerization process, and combinations thereof in the presence of one or more catalyst systems including, but not limited to Ziegler-Natta catalyst systems, metallocene catalyst systems, and/or post-metallocene catalyst systems, using one or more conventional reactors, e.g. fluidized bed gas phase reactors, loop reactors, stirred tank reactors, batch reactors in parallel, series, and/or any combinations thereof.

Such LLDPE are commercially available under the tradename DOWLEX™ from The Dow Chemical Company.

## Additives

The polyethylene blend-composition may further comprise one or more additional additives. Such additives include, but are not limited to, one or more hydrotalcite based neutralizing agents, one or more nucleating agents, one or more antistatic agents, one or more color enhancers, one or more dyes, one or more lubricants, one or more fillers, one or more pigments, one or more primary antioxidants, one or more secondary antioxidants, one or more processing aids, one or more UV stabilizers, and/or combinations thereof. The polyethylene blend -composition may comprise any amounts of such additives. The polyethylene blend-composition may comprise from about 0 to about 10 percent by the combined weight of such additives, based on the total weight of the polyethylene blend composition.

## Production

The polyethylene blend-composition is prepared via any conventional melt blending process such as extrusion via an extruder, e.g. single or twin screw extruder. The HDPE, LLDPE, and optionally one or more additives may be melt blended in any order via one or more extruders to form a uniform polyethylene blend-composition.

## Applications

The polyethylene blend-composition may be formed into a film via, for example, a blown film process. In one embodiment, when the polyethylene blend-composition is formed into a film via a blown film process, the output rate is improved at least 6 percent relative to a similar linear low density polyethylene;. In one embodiment, the polyethylene blend-composition may be formed into a multi-layer blown film structure. In another embodiment, the polyethylene blend-composition may be formed into a single layer or a multi-layer blown film structure associated with one or more substrates. The blown films prepared according to the present invention may be used as lamination films where the blown polyethylene film is adhesively laminated to a substrate such as biaxially oriented polypropylene (BOPP) films or biaxially oriented polyethylene terephthalate (BOPET) films, liner films, sealant webs, shrink films, stretch films, etc. The blown films according to the present invention have a thickness in the range of from 0.3 to 5 mils, for example, 0.5 to 5 mils.

## Examples

The following examples illustrate the present invention but are not intended to limit the scope of the invention. The examples of the instant invention demonstrate that when the polyethylene blend-composition is formed into a film via a blown film process, the output rate is improved at least 6 percent relative to a similar linear low density polyethylene.

## Polyethylene Blend-Composition Components:

**LLDPE1** is a linear low density polyethylene, prepared via solution polymerization process in a single reactor in the presence of a Ziegler-Natta based catalyst system, having a melt index ($I_2$) of approximately 0.96 g/10 minutes and a density of approximately 0.920 g/cm$^3$, which is commercially available under the tradename DOWLEX 2045G from The Dow Chemical Company. The properties of the LLDPE1 are measured, and reported in **Table 1.**

**HDPE-1** is a high density polyethylene, prepared via solution polymerization process in a single reactor in the absence of any other comonomers in the presence of a Ziegler-Natta based catalyst system, having a melt index ($I_2$) of approximately 0.27 g/10 minutes and a density of approximately 0.958 g/cm$^3$, which is provided by The Dow Chemical Company. The properties of the HDPE-1 are measured, and reported in **Table 1.**

**HDPE-2** is a high density polyethylene(ethylene/hexene copolymer), prepared via gasphase polymerization process in a dual reactor connected in series configuration in the presence of a Ziegler-Natta based catalyst system, having a melt index ($I_2$) of approximately 0.185 g/10 minutes and a density of approximately 0.958 g/cm$^3$, which is provided by The Dow Chemical Company. The properties of the HDPE-2 are measured, and reported in **Table 1**.

**HDPE-3** is a high density polyethylene(ethylene/hexene copolymer), prepared via gasphase polymerization process in a single reactor in the presence of a chromium-based catalyst system, having a melt index ($I_2$) of approximately 0.026 g/10 minutes and a density of approximately 0.955 g/cm$^3$, which is provided by The Dow Chemical Company. The properties of the HDPE-3 are measured, and reported in **Table 1**.

## Inventive Composition 1

Inventive Composition 1 is a polyethylene blend-composition comprising the melt blending product of (a) 3 percent by weight of HDPE-2; and (b) 97 percent by weight of LLDPE1. The properties of the Inventive Composition 1 are measured, and reported in Table 2.

## Inventive Composition 2

Inventive Composition 2 is a polyethylene blend-composition comprising the melt blending product of (a) 3 percent by weight of HDPE-3; and (b) 97 percent by weight of LLDPE1. The properties of the Inventive Composition 1 are measured, and reported in Table 2.

## Comparative Composition A

Comparative Composition A is a polyethylene blend-composition comprising 100 percent by weight of LLDPE1.

The properties of the Comparative Composition A are measured, and reported in **Table 2.**

**Comparative Composition B**

Comparative Composition B a polyethylene blend-composition comprising the melt blending product of (a) 3 percent by weight of HDPE-1; and (b) 97 percent by weight of LLDPE1 The properties of the Comparative Composition B are measured, and reported in **Table 2.**

**Inventive Films 1**

Inventive Compositions 1 is formed into Inventive Film 1 via a blown film process based on the process conditions reported in Table 3. Inventive Films 1, a monolayer film, was tested for its properties, and the results are reported in Table 4. The film properties reported in Table 4 are for films made at maximum rate (approximately 14.8 1b/hr/in or 373 lb/hr).

**Inventive Films 2**

Inventive Compositions 2 is formed into Inventive Film 2 via a blown film process based on the process conditions reported in Table 3. Inventive Films 2, a monolayer film, was tested for its properties, and the results are reported in Table 4. The film properties reported in Table 4 are for films made at maximum rate (approximately 16.3 lb/hr/in or 409 1b/hr).

**Comparative Films A**

Comparative Compositions A is formed into Comparative Film A via a blown film process based on the process conditions reported in Table 3. Comparative Film A, a monolayer film, is tested for its properties, and the results are reported in Table 4. The film properties reported in Table 4 are for films made at maximum rate (approximately 13.9 lb/hr/in or 349 lb/hr).

**Comparative Films B**

Comparative Compositions B is formed into Comparative Film B via a blown film process based on the process conditions reported in Table 3. Comparative Film B, a monolayer film, is tested for its properties, and the results are reported in Table 4. The film properties reported in Table 4 are for films made at maximum rate (approximately 13.6 1b/hr/in or 343 lb/hr).

**Table 1**

| | Units | HDPE-1 | HDPE-2 | HDPE-3 | LLDPE1 |
|---|---|---|---|---|---|
| **Density** | g/cm$^3$ | 0.958 | 0.958 | 0.955 | 0.920 |
| **$I_2$** | g/10 min | 0.27 | 0.185 | 0.026 | 0.96 |
| **$I_{10}/I_2$** | | 8.0 | 20.9 | 30.0 | 7.87 |
| **scosity (0.1 rad/s)** | Pa.s | 27,145 | 43,147 | 134,000 | 8,636 |
| **Viscosity (1.0 rad/s)** | Pa.s | 18,499 | 17,224 | 40,255 | 7,021 |
| **Viscosity (10 rad/s)** | Pa.s | 9,297 | 5,548 | 10,551 | 4,260 |
| **Viscosity (100 rad/s)** | Pa.s | 3,082 | 1,412 | 2,380 | 1,677 |
| **Tan Delta (0.1 rad/s)** | | 4.64 | 1.55 | 1.00 | 10.4 |
| **Melt Strength** | cN | 6.0 | 9.9 | 31.2 | 3.0 |
| **$M_n$** | g/mol | 45,299 | 8,734 | 12,625 | 28,750 |
| **$M_w$** | g/mol | 184,874 | 193,826 | 284,361 | 115,650 |
| **$M_z$** | g/mol | 528,491 | 1,224,131 | 2,010,839 | 386,194 |
| **$M_w/M_n$** | | 4.08 | 22.2 | 22.5 | 4.02 |

(continued)

|  | Units | HDPE-1 | HDPE-2 | HDPE-3 | LLDPE1 |
|---|---|---|---|---|---|
| $T_m$ 1(DSC) | °C | 119.4 | 118.3 | 118 | 122.3 |
| $T_m$ 2(DSC) | °C |  |  |  | 110.4 |
| $T_1$ (DSC) | °C | 135.1 | 132.7 | 133.8 | 105.0 |
| Heat of fusion | J/g | 219.3 | 217.8 | 210.4 | 140.5 |

**Table 2**

| Polymer Property | Units | Inventive Composition 1 | Inventive Composition 2 | Comparative Composition A | Comparative Composition B |
|---|---|---|---|---|---|
| Density | g/cm$^3$ | 0.921 | 0.921 | 0.920 | 0.921 |
| $I_2$ | g/10 min | 0.936 | 0.884 | 0.960 | 0.929 |
| $I_{10}/I_2$ |  | 7.45 | 8.05 | 7.87 | 7.19 |
| Viscosity (0.1 rad/s) | Pa.s | 8,700 | 9,544 | 8,636 | 8,675 |
| Viscosity (1.0 rad/s) | Pa.s | 6,956 | 7,446 | 7,021 | 7,058 |
| Viscosity (10 rad/s) | Pa.s | 4,154 | 4,380 | 4,260 | 4,265 |
| Viscosity (100 rad/s) | Pa.s | 1,617 | 1,691 | 1,677 | 1,668 |
| Tan Delta (0.1 rad/s) |  | 9.4 | 8.0 | 10.4 | 10.5 |
| Melt Strength | cN | 3.2 | 3.5 | 3.0 | 3.2 |
| $M_n$ | g/mol | 28,348 | 27,900 | 28,750 | 29,215 |
| $M_w$ | g/mol | 116,726 | 114,881 | 115,650 | 116,021 |
| $M_z$ | g/mol | 386,519 | 371,464 | 386,194 | 370,786 |
| $M_w/M_n$ |  | 4.12 | 4.12 | 4.02 | 3.97 |
| $T_{m1}$(DSC) | °C | 122.8 | 122.4 | 122.3 | 121.7 |
| $T_{m2}$(DSC) | °C | 111.3 | 110.8 | 110.4 | 109.5 |
| $T_{c1}$(DSC) | °C | 111.4 | 110.0 | 105.0 | 108.9 |
| Heat of fusion | J/g | 142.7 | 143.6 | 140.5 | 142.1 |

**Table 3**

| Film Fabrication | Units | Inventive Film 1 | Inventive Film 2 | Comparative Film A | Comparative Film B |
|---|---|---|---|---|---|
| Max Output rate | 1bs/hr | 373 | 409 | 349 | 343 |
| Max Output rate | 1bs/hr/inch | 14.8 | 16.3 | 13.9 | 13.6 |

(continued)

| Film Fabrication | Units | Inventive Film 1 | Inventive Film 2 | Comparative Film A | Comparative Film B |
|---|---|---|---|---|---|
| Rate improvement over CE-A | % | 6.9 | 17.2 | 0 | -1.7 |
| Screw Speed (RPM) | RPM | 52.8 | 60.3 | 46.8 | 49.1 |
| Frost Line Height (FLH-inch) | Inch | 57 | 67 | 57 | 58 |
| External Air (%) | % | 45 | 48.6 | 45.7 | 41.2 |
| IBC Exhaust Air (%) | % | 96.3 | 97.1 | 97.6 | 97.4 |
| IBC Supply Air (%) | % | 35 | 35 | 34.9 | 35.5 |
| % Full load current | % | 8.4 | 5.8 | 6.3 | 8 |
| Horsepower | HP | 12 | 8 | 5 | 12 |
| Barrel P1 (psi) | psi | 3100 | 3280 | 3650 | 3130 |
| Barrel P2 (psi) | Psi | 3870 | 4090 | 4240 | 3940 |
| Barrel P3 (psi) | Psi | 4260 | 4420 | 4300 | 4270 |
| Screen Pressure (psi) | Psi | 4280 | 4530 | 4240 | 4250 |
| Adapter P (psi) | Psi | 2480 | 2680 | 2400 | 2480 |

## Table 3 Continued

| Film Fabrication | Units | Inventive Film 1 | Inventive Film 2 | Comparative Film A | Comparative Film B |
|---|---|---|---|---|---|
| Melt Temp. | °F | 447 | 455 | 444 | 443 |
| Temp. Profile (°F) | | | | | |
| Barrel T1 | °F | 350 | 350 | 350 | 350 |
| Barrel T2 | °F | 425 | 425 | 425 | 425 |
| Barrel T3 | °F | 380 | 380 | 380 | 380 |
| Barrel T4 | °F | 325 | 325 | 325 | 325 |
| Barrel T5 | °F | 345 | 345 | 345 | 345 |
| Screen T | °F | 430 | 430 | 430 | 430 |
| Adapter T | °F | 445 | 445 | 445 | 445 |
| Block T | °F | 430 | 430 | 430 | 430 |
| Lower Die T | °F | 440 | 440 | 440 | 440 |
| Inner Die T | °F | 440 | 440 | 440 | 440 |
| Upper Die T | °F | 440 | 440 | 440 | 440 |

**Table 4**

| Film Properties | Units | Inventive Film 1 | Inventive Film 2 | Comparative Film A | Comparative Film B |
|---|---|---|---|---|---|
| Film Thickness | mil | 2 | 2 | 2 | 2 |
| Dart Impact Resistance (Method A) | g | 340 | 292 | 424 | 283 |
| Tear: Elmendorf-MD | g/mil | 409 | 398 | 452 | 455 |
| Tear: Elmendorf-CD | g/mil | 559 | 646 | 514 | 580 |
| Puncture | ft*1bf/in$^3$ | 259 | 260 | 321 | 270 |
| Total Haze | % | 18.6 | 27.9 | 21.5 | 31.1 |
| Internal Haze | % | 4.0 | 5.2 | 4.5 | 4.8 |
| Gloss | % | 34.3 | 23.4 | 33.6 | 20.6 |
| Secant Modulus-CD(1%) | psi | 46355 | 45046 | 44333 | 47200 |
| Secant Modulus-MD(1%) | psi | 42784 | 40409 | 38174 | 39913 |

## Test Methods

Test methods include the following:

### Melt index

Melt indices ($I_2$ and $I_{10}$) were measured in accordance to ASTM D-1238 at 190°C and at 2.16 kg and 10 kg load, respectively. Their values are reported in g/10 min.

### Density

Samples for density measurement were prepared according to ASTM D4703. Measurements were made within one hour of sample pressing using ASTM D792, Method B.

### Dynamic shear rheology

Samples were compression-molded into 3 mm thick x 25 mm diameter circular plaques at 177°C for 5 minutes under 10 MPa pressure in air. The sample was then taken out of the press and placed on the counter to cool.

Constant temperature frequency sweep measurements were performed on an ARES strain controlled rheometer (TA Instruments) equipped with 25 mm parallel plates, under a nitrogen purge. For each measurement, the rheometer was thermally equilibrated for at least 30 minutes prior to zeroing the gap. The sample was placed on the plate and allowed to melt for five minutes at 190°C. The plates were then closed to 2 mm, the sample trimmed, and then the test was started. The method has an additional five minute delay built in, to allow for temperature equilibrium. The experiments were performed at 190°C over a frequency range of 0.1-100 rad/s at five points per decade interval. The strain amplitude was constant at 10%. The stress response was analyzed in terms of amplitude and phase, from which the storage modulus (G'), loss modulus (G''), complex modulus (G*), dynamic viscosity ($\eta$*), and tan ($\delta$) or tan delta were calculated.

### Melt Strength

Melt strength measurements are conducted on a Gottfert Rheotens 71.97 (Göettfert Inc.; Rock Hill, SC) attached to a Gottfert Rheotester 2000 capillary rheometer. A polymer melt is extruded through a capillary die with a flat entrance angle (180 degrees) with a capillary diameter of 2.0 mm and an aspect ratio (capillary length/capillary diameter) of 15.

After equilibrating the samples at 190 °C for 10 minutes, the piston is run at a constant piston speed of 0.265 mm/second. The standard test temperature is 190 °C. The sample is drawn uniaxially to a set of accelerating nips located 100 mm below the die with an acceleration of 2.4 mm/second$^2$. The tensile force is recorded as a function of the take-up speed of the nip rolls. Melt strength is reported as the plateau force (cN) before the strand broke. The following conditions are used in the melt strength measurements: Plunger speed = 0.265 mm/second; wheel acceleration = 2.4 mm/s$^2$; capillary diameter = 2.0 mm; capillary length = 30 mm; and barrel diameter = 12 mm.

**DSC Crystallinity Determination**

Differential Scanning Calorimetry (DSC) can be used to measure the crystallinity of a sample at a given temperature for a wide range of temperatures. For the Examples, a TA model Q1000 DSC (TA Instruments; New Castle, DE) equipped with an RCS (Refrigerated Cooling System) cooling accessory and an autosampler module is used to perform the tests. During testing, a nitrogen purge gas flow of 50 ml/minute is used. Each sample is pressed into a thin film and melted in the press at about 175 °C; the melted sample is then air-cooled to room temperature (-25 °C). A 3-10 mg sample of the cooled material is cut into a 6 mm diameter disk, weighed, placed in a light aluminum pan (ca 50 mg), and crimped shut. The sample is then tested for its thermal behavior.

The thermal behavior of the sample is determined by changing the sample temperature upwards and downwards to create a response versus temperature profile. The sample is first rapidly heated to 180 °C and held at an isothermal state for 3 minutes in order to remove any previous thermal history. Next, the sample is then cooled to -40 °C at a 10 °C/minute cooling rate and held at -40 °C for 3 minutes. The sample is then heated to 150 °C at 10 °C/minute heating rate. The cooling and second heating curves are recorded. The values determined are peak melting temperature ($T_m$), peak crystallization temperature ($T_c$), the heat of fusion ($H_f$), and the % crystallinity for polyethylene samples calculated using Equation 1:

$$\% \text{ Crystallinity} = [(H_f \text{ (J/g)})/(292 \text{ J/g})] \times 100 \quad \text{(Eq. 1)}$$

The heat of fusion ($H_f$) and the peak melting temperature are reported from the second heat curve. The peak crystallization temperature is determined from the cooling curve.

**High Temperature Gel Permeation Chromatography**

The Gel Permeation Chromatography (GPC) system consists of a Waters (Milford, Mass) 150C high temperature chromatograph (other suitable high temperatures GPC instruments include Polymer Laboratories (Shropshire, UK) Model 210 and Model 220) equipped with an on-board differential refractometer (RI) (other suitable concentration detectors can include an IR4 infra-red detector from Polymer ChAR (Valencia, Spain)). Data collection is performed using Viscotek TriSEC software, Version 3, and a 4-channel Viscotek Data Manager DM400. The system is also equipped with an on-line solvent degassing device from Polymer Laboratories (Shropshire, United Kingdom).

Suitable high temperature GPC columns can be used such as four 30 cm long Shodex HT803 13 micron columns or four 30 cm Polymer Labs columns of 20-micron mixed-pore-size packing (MixA LS, Polymer Labs). The sample carousel compartment is operated at 140 °C and the column compartment is operated at 150 °C. The samples are prepared at a concentration of 0.1 grams of polymer in 50 milliliters of solvent. The chromatographic solvent and the sample preparation solvent contain 200 ppm of trichlorobenzene (TCB). Both solvents are sparged with nitrogen. The polyethylene samples are gently stirred at 160 °C for four hours. The injection volume is 200 microliters. The flow rate through the GPC is set at 1 ml/minute.

The GPC column set is calibrated by running 21 narrow molecular weight distribution polystyrene standards. The molecular weight (MW) of the standards ranges from 580 to 8,400,000, and the standards are contained in 6 "cocktail" mixtures. Each standard mixture has at least a decade of separation between individual molecular weights. The standard mixtures are purchased from Polymer Laboratories. The polystyrene standards are prepared at 0.025 g in 50 mL of solvent for molecular weights equal to or greater than 1,000,000 and 0.05 g in 50 mL of solvent for molecular weights less than 1,000,000. The polystyrene standards were dissolved at 80 °C with gentle agitation for 30 minutes. The narrow standards mixtures are run first and in order of decreasing highest molecular weight component to minimize degradation. The polystyrene standard peak molecular weights are converted to polyethylene molecular weight using Equation 2 (as described in Williams and Ward, J. Polym. Sci., Polym. Letters, 6, 621 (1968)):

$$M_{polyethylene} = A \times (M_{polystyrene})^{B} \quad (Eq.\ 2),$$

where M is the molecular weight of polyethylene or polystyrene (as marked), and B is equal to 1.0. It is known to those of ordinary skill in the art that A may be in a range of about 0.38 to about 0.44 and is determined at the time of calibration using a broad polyethylene standard. Use of this polyethylene calibration method to obtain molecular weight values, such as the molecular weight distribution (MWD or $M_w/M_n$), and related statistics (generally refers to conventional GPC or cc-GPC results), is defined here as the modified method of Williams and Ward.

**Film Testing Conditions**

The following physical properties are measured on the films produced:

- **Total and Internal Haze:** Samples measured for internal haze and overall haze are sampled and prepared according to ASTM D 1746. Internal haze was obtained via refractive index matching using mineral oil on both sides of the films. A Hazegard Plus (BYK-Gardner USA; Columbia, MD) is used for testing.
- **45° Gloss:** ASTM D-2457.
- **1% Secant Modulus- MD (machine direction) and CD (cross direction):** ASTM D-882.
- **MD and CD Elmendorf Tear Strength:** ASTM D-1922
- **MD and CD Tensile Strength:** ASTM D-882
- **Dart Impact Strength:** ASTM D-1709, Method A
- **Puncture Strength:** Puncture strength is measured on a Instron Model 4201 with Sintech Testworks Software Version 3.10. The specimen size is 6" x 6" and 4 measurements are made to determine an average puncture value. The film is conditioned for 40 hours after film production and at least 24 hours in an ASTM controlled laboratory. A 100 lb load cell is used with a round specimen holder 12.56" square. The puncture probe is a ½" diameter polished stainless steel ball with a 7.5" maximum travel length. There is no gauge length; the probe is as close as possible to, but not touching, the specimen. The crosshead speed used is 10"/minute. The thickness is measured in the middle of the specimen. The thickness of the film, the distance the crosshead traveled, and the peak load are used to determine the puncture by the software. The puncture probe is cleaned using a "Kim-wipe" after each specimen.

**Determination of Maximum Output Rate of Blown Film**

Film samples are collected at a controlled rate and at a maximum rate. The controlled rate is 250 1b/hr which equals an output rate of 10 1b/hr/inch of die circumference. Note the die diameter used for the maximum output trials is an 8" die so that for the controlled rate, as an example, the conversion between 1b/hr and lb/hr/inch of die circumference is shown in Equation 3. Similarly, such an equation can be used for other rates, such as the maximum rate, by substituting the maximum rate in Equation 3 for the standard rate of 250 1b/hr to determined the lb/hr/inch of die circumference.

$$\text{Lb/Hr/Inch of Die Circumference} = (250\ \text{Lb/Hr}) / (8 * \pi) = 10 \quad (Eq.\ 3)$$

The maximum rate for a given sample is determined by increasing the output rate to the point where bubble stability is the limiting factor. The extruder profile is maintained for both samples (standard rate and maximum rate), however the melt temperature is higher for the maximum rate samples due to the increased shear rate. The maximum rate is determined by maximizing both the internal bubble cooling and the external cooling via the air ring. The maximum bubble stability is determined by taking the bubble to the point where any one of the following things was observed (a) the bubble would not stay seated in the air ring (b) the bubble started to lose its shape (c) the bubble started to breathe in and out or (d) the frost line height would become unstable. At that point the rate is reduced to where the bubble is reseated in the air ring while maintaining the shape of the bubble and a steady frost line height and then a sample is collected. The cooling on the bubble is adjusted by adjusting the air ring and maintaining the bubble. This is taken as the maximum output rate while maintaining bubble stability.

Monolayer films were produced. The die diameter is 8 inches, the die gap is 70 mils, the blow up ratio is 2.5, and internal bubble cooling is used.

**Claims**

1. A polyethylene blend-composition suitable for blown film comprising the melt blending product of:

from 0.5 to 5 percent by weight of a high density polyethylene having a density in the range of from 0.950 to 0.970 g/cm$^3$, and a melt flow rate ($I_2$) in the range of from less than 0.5 g/10 minutes, and a molecular weight distribution ($M_w/M_n$) in the range of from 10 to 40, and $M_z$ in the range of from 800,000 to 5,000,000 g/mol;
90 percent or greater by weight of a linear low density polyethylene having a density in the range of from 0.910 to 0.950 g/cm$^3$, and a melt index ($I_2$) in the range of from 0.1 to less than or equal to 5 g/10 minutes;
optionally a hydrotalcite based neutralizing agent;
optionally one or more nucleating agents;
and optionally one or more antioxidants.

2. The polyethylene blend-composition of Claim 1, wherein said linear low density polyethylene is a heterogeneous linear low density polyethylene.

3. The polyethylene blend-composition of Claim 1, wherein when said polyethylene blend-composition is formed into a film via blown film process, the output rate is improved at least 6 percent relative to a similar linear low density polyethylene.

4. A blown film comprising the polyethylene blend-composition of Claim 1.

5. An article comprising one or more blown films comprising the polyethylene blend-composition of Claim 1.

6. A container device comprising:

a. one or more substrates; and
b. one or more layers comprising one or more blown films comprising the polyethylene blend-composition of Claim 1.


**Patentansprüche**

1. Eine Polyethylenmischzusammensetzung, die für Blasfolie geeignet ist und das Schmelzmischprodukt aus Folgendem beinhaltet:

zu 0,5 bis 5 Gewichtsprozent einem Polyethylen hoher Dichte mit einer Dichte im Bereich von 0,950 bis 0,970 g/cm$^3$ und einem Schmelzfließindex ($I_2$) im Bereich von weniger als 0,5 g/10 Minuten und einer Molekulargewichtsverteilung ($M_w/M_n$) im Bereich von 10 bis 40 und $M_z$ im Bereich von 800 000 bis 5 000 000 g/mol;
zu 90 Gewichtsprozent oder mehr einem linearen Polyethylen niederer Dichte mit einer Dichte im Bereich von 0,910 bis 0,950 g/cm$^3$ und einem Schmelzindex ($I_2$) im Bereich von 0,1 bis weniger als oder gleich 5 g/10 Minuten;
optional einem Neutralisierungsmittel auf Hydrotalkitbasis;
optional einem oder mehreren Keimbildnern;
und optional einem oder mehreren Antioxidationsmitteln.

2. Polyethylenmischzusammensetzung gemäß Anspruch 1, wobei das lineare Polyethylen niederer Dichte ein heterogenes lineares Polyethylen niederer Dichte ist.

3. Polyethylenmischzusammensetzung gemäß Anspruch 1, wobei, wenn die Polyethylenmischzusammensetzung mittels eines Blasfolienverfahrens zu einer Folie geformt wird, die Ausbringungsleistung relativ zu einem ähnlichen linearen Polyethylen niederer Dichte um mindestens 6 Prozent verbessert wird.

4. Eine Blasfolie, die die Polyethylenmischzusammensetzung gemäß Anspruch 1 beinhaltet.

5. Ein Artikel, der eine oder mehrere Blasfolien, beinhaltend die Polyethylenmischzusammensetzung gemäß Anspruch 1, beinhaltet.

6. Eine Behältnisvorrichtung, die Folgendes beinhaltet:

a. ein oder mehrere Substrate; und

b. eine oder mehrere Schichten, die eine oder mehrere Blasfolien, beinhaltend die Polyethylenmischzusammensetzung gemäß Anspruch 1, beinhalten.

**Revendications**

1. Une composition-mélange homogène de polyéthylène convenant pour une gaine soufflée comprenant le produit du mélange homogène à l'état fondu de :

de 0,5 à 5 pour cent en poids d'un polyéthylène haute densité présentant une masse volumique comprise dans la gamme allant de 0,950 à 0,970 g/cm$^3$, et un indice de fluidité à l'état fondu ($I_2$) compris dans la gamme partant de inférieur à 0,5 g/10 minutes, et une distribution des masses moléculaires ($M_w/M_n$) comprise dans la gamme allant de 10 à 40, et $M_z$ dans la gamme allant de 800 000 à 5 000 000 g/mol ;
90 pour cent ou plus en poids d'un polyéthylène basse densité linéaire présentant une masse volumique comprise dans la gamme allant de 0,910 à 0,950 g/cm$^3$, et un indice de fluidité à l'état fondu ($I_2$) compris dans la gamme allant de 0,1 à inférieur ou égal à 5 g/10 minutes ;
facultativement un agent de neutralisation à base d'hydrotalcite ;
facultativement un ou plusieurs agents de nucléation ;
et facultativement un ou plusieurs antioxydants.

2. La composition-mélange homogène de polyéthylène de la revendication 1, où ledit polyéthylène basse densité linéaire est un polyéthylène basse densité linéaire hétérogène.

3. La composition-mélange homogène de polyéthylène de la revendication 1, où lorsque ladite composition-mélange homogène de polyéthylène est formée en un film via un procédé de soufflage de gaine, la cadence de production est améliorée d'au moins 6 pour cent relativement à un polyéthylène basse densité linéaire similaire.

4. Une gaine soufflée comprenant la composition-mélange homogène de polyéthylène de la revendication 1.

5. Un article comprenant une ou plusieurs gaines soufflées comprenant la composition-mélange homogène de polyéthylène de la revendication 1.

6. Un dispositif conteneur comprenant :

a. un ou plusieurs substrats ; et
b. une ou plusieurs couches comprenant une ou plusieurs gaines soufflées comprenant la composition-mélange homogène de polyéthylène de la revendication 1.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WILLIAMS ; WARD.** *J. Polym. Sci., Polym. Letters,* 1968, vol. 6, 621